# EUROPÄISCHE PATENTSCHRIFT

(11) **EP 3 468 798 B1**
(45) Veröffentlichungstag und Bekanntmachung des Hinweises auf die Patenterteilung: **23.03.2022**
(21) Anmeldenummer: 17720837.8
(22) Anmeldetag: 08.05.2017
(51) Int. Cl.: B32B 37/00, B44C 1/16

(54) **VERFAHREN ZUR HERSTELLUNG EINES KUNSTSTOFF-FAHRZEUGANBAUTEILS, VORRICHTUNG, PRODUKT UND VERWENDUNG**
METHOD FOR PRODUCING A PLASTIC VEHICLE PART, MANUFACTURING DEVICE, PRODUCT AND USE
PROCEDE DE FABRICATION D'UN COMPOSANT EN MATIERE SYNTHETIQUE DE VEHICULE, DISPOSITIF DE FABRICATION, PRODUIT ET UTILISATION

(30) Priorität: 14.06.2016 EP 16174290
(43) Veröffentlichungstag der Anmeldung: 17.04.2019
(73) Patentinhaber: SAINT-GOBAIN GLASS FRANCE, 92400 Courbevoie (FR)
(72) Erfinder: WEISSENBERGER, Uwe, 97078 Würzburg (DE)
(74) Vertreter: Hermanns, Ellen
(86) Internationale Anmeldenummer: PCT/EP2017/060877
(87) Internationale Veröffentlichungsnummer: WO 2017/215840

(56) Entgegenhaltungen:
- EP-A1- 1 424 709
- EP-A1- 2 689 929
- WO-A1-2013/050208
- WO-A1-2016/096184
- WO-A2-2012/083007
- DE-A1- 19 940 244
- DE-A1-102011 050 746
- DE-A1-102013 000 400
- US-A- 4 350 550
- US-B1- 7 547 372

## Beschreibung

Die Erfindung betrifft ein Verfahren und eine Vorrichtung zur Herstellung eines polymeren Fahrzeug-Anbauteils, ein polymeres Fahrzeug-Anbauteil und dessen Verwendung.

Im Zuge immer strengerer Vorgaben zur Kohlendioxidemission von Kraftfahrzeugen gibt es starke Bestrebungen, das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Formteile aus polymeren Werkstoffen können dabei in praktisch jeder gewünschten Form und Geometrie hergestellt werden.

Viele Werkstoffteile aus Kunststoffen müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtige Rolle. Vor allem in der Automobilindustrie sind neben mechanischen Eigenschaften auch Merkmale im Bereich des Designs und der Ästhetik von großer Bedeutung.

Eine etablierte Methode zur Erzeugung optischer Effekte ist das Verfahren zur Folienhinterspritzung (FIM - film insert molding). In diesem Verfahren wird eine entsprechende Folie in das Spritzgießwerkzeug eingelegt und mit einem geeigneten Kunststoff hinterspritzt. Auf diese Weise lassen sich die Oberflächeneigenschaften und Geometrie von polymeren Werkstoffen gezielt und vielseitig beeinflussen und modifizieren. Ein Verfahren zur Herstellung von polymeren Anbauteilen mittels Folienhinterspritzung ist beispielsweise aus WO2013/050208 bekannt. Eine wichtige Voraussetzung für die Anwendung des Verfahrens der Folienhinterspritzung sind temperaturstabile Folien. Zudem müssen auf der Folie befindliche Aufdrucke soweit temperaturbeständig sein, dass sie die Hinterspritzung mit einem flüssigen Polymer wie Polycarbonat überstehen. EP2689929A1 offenbart den Aufbau einer zur Folienhinterspritzung geeigneten Folie mit einer Metallschicht als Zierelement.

Es ist auch bekannt, polymere Werkstücke mittels Heißprägeverfahren mit Zierelementen zu versehen. So offenbart WO2016/096184A1 (Dokument nach Art. 54(3) EPÜ) ein Verfahren zur Herstellung eines polymeren Fahrzeug-Anbauteils, das aus mehreren polymeren Materialphasen bestehen kann. Das Zierelement wird auf eine äußere Oberfläche des Anbauteils aufgeprägt, wo es den Umwelteinflüssen ausgesetzt ist. Das Anbauteil wird nach dem Heißprägen mit einer Schutzbeschichtung versehen, um das Zierelement vor Beschädigung zu schützen.

US7547372B1 offenbart den Aufbau einer Heißprägefolie, die auch zur Anwendung auf Fahrzeug-Anbauteilen geeignet ist.

US 4 350 550 A offenbart ein Verfahren zum Dekorieren unterschiedlicher Bereiche der vorderen Oberfläche einer geformten Harzplatte mit einem dekorativen Material in einem Bereich und einer dekorativen Beschichtung in einem anderen Bereich.

In DE 199 40 244 A1 ist ein Verfahren zur Herstellung eines folienkaschierten Kunststoffteils unter Verwendung einer Heißprägemaschine offenbart.

WO 2012/083007 A2 offenbart ein Verfahren zum Bilden einer Polymerkomponentenanordnung, umfassend das Spritzgießen einer ersten Unterkomponente, das Spritzgießen einer zweiten Unterkomponente und das Zusammenkoppeln der ersten Unterkomponente und der zweiten Unterkomponente, um die Polymerkomponentenanordnung zu bilden.

In EP 1 424 709 A1 ist ein Verfahren zum Herstellen eines dekorativen Formgegenstands, welcher als Harzformgegenstand ausgebildet ist, der mit einem Farbdesignbild dekoriert ist, offenbart.

In DE 10 2013 000400 A1 ein Verfahren zur Transferlaminierung offenbart.

Die Erfindung hat die Aufgabe, ein weiteres Verfahren zur Herstellung eines polymeren Fahrzeug-Anbauteils mit Zierelement bereitzustellen. Das Zierelement soll dabei vor äußeren Einflüssen geschützt sein und eine optisch ansprechende und gut sichtbare Gestaltung der Scheibe ermöglichen. Zudem soll das Verfahren industriell einfach anwendbar sein.

Die Aufgabe der Erfindung wird durch das Verfahren gemäß Anspruch 1, eine Vorrichtung gemäß Anspruch 11 und ein polymeres Fahrzeug-Anbauteil mit Zierelement gemäß Anspruch 12 gelöst. Bevorzugte Ausführungen gehen aus den Unteransprüchen hervor.

Das erfindungsgemäße Verfahren zur Herstellung eines polymeren Fahrzeug-Anbauteils mit Zierelement umfasst zumindest die folgenden Verfahrensschritte:
(a) eine erste polymere Materialphase wird bereitgestellt;
(b) ein Zierelement wird durch Heißprägen mittels eines Stempels von einer Trägerfolie auf eine erste Oberfläche der ersten polymeren Materialphase übertragen;
(c) auf der ersten Oberfläche der ersten polymeren Materialphase wird eine zweite polymere Materialphase aufgebracht, so dass das Zierelement zwischen der ersten polymeren Materialphase und der zweiten polymeren Materialphase, insbesondere an der Grenzfläche der beiden Materialphasen angeordnet wird.

Das erfindungsgemäße polymere Anbauteil (oder Kunststoff-Anbauteil) ist bevorzugt ein äußeres Anbauteil, also ein Anbauteil für den Außenbereich des Fahrzeugs, oder ein Anbauteil für den Fahrzeug-Innenraum. Das Anbauteil, sofern es als Außenanbauteil vorgesehen ist, ist insbesondere eine Scheibe (insbesondere Fahrzeug-Fensterscheibe, beispielsweise Dachscheibe, Heckscheibe, Seitenscheibe), eine Säulenabdeckung, eine Leuchtenabdeckung, eine Kühlergrillverkleidung, eine Blende, ein Dachpaneel, ein Spiegelgehäuse, ein Rahmenelement, eine Seitenleiste, ein Schweller oder ein Spoiler. Das Anbauteil, sofern es für den Innenraum vorgesehen ist, ist beispielsweise eine Armatur oder Schalttafel.

Die Erfindung ermöglicht unter anderem die optische Aufwertung und Veredelung von Sichtflächen von Kunststoff-Fahrzeugscheiben, das Einbringen von Informationen (in Form von Text oder Symbolen), die Darstellung einer Vielzahl von optischen Effekten und Freiheit in der Farbgestaltung des Anbauteils durch eine Vielzahl verfügbarer Heißprägefolien.

Das Anbauteil wird über eine seiner Oberflächen am Fahrzeug fixiert. Die gegenüberliegende bildet dann die in Einbaulage sichtbare, für den Betrachter oder Benutzer zugängliche Oberfläche aus. Diese Oberfläche wird im Sinne der Erfindung als Außenfläche oder nach außen weisende oder nach außen gewandte Oberfläche des Anbauteils bezeichnet. Die Materialphase können auch als Komponenten des Anbauteils bezeichnet werden.

Mindestens eine der beiden polymeren Materialphasen ist transparent. Die transparente Materialphase ist dafür vorgesehen, in Einbaulage des Anbauteils nach außen zu weisen - die Außenfläche des Anbauteils ist also die von der zweiten Materialphase angewandte Oberfläche der ersten Materialphase. Durch die Position des Zierelements hinter der transparenten Materialphase wird ein glasartiger Eindruck mit Tiefenwirkung erzeugt, der optisch sehr ansprechend ist. Außerdem ist das Zierelement zwischen den beiden Materialphasen vor Beschädigungen geschützt. Das sind große Vorteile der vorliegenden Erfindung.

In einer bevorzugten Ausführung ist eine der beiden polymeren Materialphasen opak. Somit umfasst das Anbauteil eine transparente und eine opake Materialphase. Dadurch wird der optisch ansprechende, glasartige Eindruck verstärkt.

Transparent bedeutet im Sinne der Erfindung, dass ein Betrachter durch die Komponente hindurchblicken kann und Objekte, die sich vom Betrachter aus gesehen hinter der Komponente befinden, erkennen kann. Die transparente Komponente kann farblos sein, oder auch gefärbt oder getönt sein. Die Transmission der transparenten Komponente im sichtbaren Spektralbereich beträgt beispielsweise größer oder gleich 70%, bevorzugt größer oder gleich 85 %.

Opak bedeutet im Sinne der Erfindung, dass ein Betrachter nicht durch die Komponente hindurchblicken kann. Die Transmission der opaken Komponente im sichtbaren Spektralbereich ist also deutlich herabgesetzt und beträgt beispielsweise kleiner oder gleich 10%, kleiner oder gleich 5%, insbesondere etwa 0%.

In einer besonders vorteilhaften Ausführung ist die erste polymere Materialphase, auf deren Oberfläche das Zierelement aufgebracht wird, transparent und die zweite polymere Materialphase opak. Das anfängliche Bereitstellen der transparenten Materialphase und mit dem anschließenden Aufbringen der opaken Materialphase hat den Vorteil einer hohen optischen Qualität des Anbauteils. Beim umgekehrten Vorgehen besteht die Gefahr, dass beim Aufspritzen der heißen transparenten Polymermasse Teile der bereits verfestigten opaken Polymermasse (genauer gesagt die darin gelösten Farbmittel) gelöst und "ausgewaschen" werden. Dies kann dazu führen, dass sich die gelösten Farbmittel als schwarze oder graue Wolke in der eigentlich transparenten Materialphase absetzen, was den optischen Eindruck mindert, insbesondere dann, wenn sich die Wolken vor dem Zierelement befinden.

Es ist jedoch grundsätzlich auch möglich und kann im Einzelfall gewünscht sein, dass die erste polymere Materialphase opak und die zweite polymere Materialphase transparent ist. In diesem Fall sollten die Anspritzpunkte der transparenten Materialphase sich weit genug vom Dekorelement entfernt befinden, sodass etwaige Wolken in der transparenten Materialphase nicht bis über das Dekorelement verschleppt werden. Die Wolken fallen dann einem Betrachter weniger stark auf und können im Einzelfall akzeptabel sein.

Jede der beiden Materialphasen, und somit auch das Anbauteil als Ganzes, ist typischerweise im Wesentlichen flächenhaft oder plattenartig ausgestaltet und weist zwei Hauptflächen und eine umlaufende Seitenkante auf. Eine der Hauptflächen der ersten Materialphase ist die erfindungsgemäße erste Oberfläche, auf welche das Zierelement aufgebracht wird.

Die transparente Materialphase und die opake Materialphase können im Wesentlichen deckungsgleich sein. Dann ist das gesamte Anbauteil opak, wobei durch die transparente Materialphase ein glasartiger optischer Eindruck erzeugt wird. Die opake Komponente kann aber auch nur in Teilbereichen des Anbauteils vorhanden sein. Dies ist beispielsweise bei Fensterscheiben der Fall, wo die opake Komponente typischerweise in einem umlaufenden Randbereich angeordnet ist, so dass die Scheibe für den Betrachter nicht sichtbar mit der Fahrzeugkarosserie verklebt werden kann.

Erfindungsgemäß wird das Zierelement durch Heißprägen auf die erste Materialphase aufgebracht. Heißprägen wird häufig auch als Hubprägen oder mit dem englischsprachigen Begriff "Hot Stamping" bezeichnet. Dabei wird die Trägerfolie mit dem Zierelement so angeordnet, dass das Zierelement dem Anbauteil, insbesondere der ersten Oberfläche des Anbauteils zugewandt ist. Anschließend wirkt der Stempel auf die vom Zierelement abgewandte Oberfläche der Trägerfolie ein, so dass das Zierelement gegen die erste Oberfläche angedrückt wird. Anschließend wird die Trägerfolie abgezogen, wobei das Zierelement auf der ersten Oberfläche verbleibt.

Bevorzugt ist die Trägerfolie als eine auf Rollen befindliche Folienbahn ausgestaltet und trägt eine Vielzahl der Zierelemente, wobei beim Heißprägen jeweils ein Zierelement unter dem Stempel (das heißt zwischen Stempel und Anbauteil) angeordnet ist. Durch die Rollen kann die Folienbahn weitertransportiert werden, so dass das nächste Zierelement unter den Stempel befördert wird und auf das nächste Anbauteil aufgebracht werden kann. So kann eine wirtschaftliche industrielle Massenfertigung erreicht werden. Die einzelnen Zierelemente können separat auf der Trägerfolie angeordnet sein. In der Praxis kann die gesamte Trägerfolie aber auch mit einer durchgängigen ein- oder mehrschichtigen Zierbeschichtung besehen sein, wobei die einzelnen Zierelemente nicht voneinander getrennt sind. Die einzelnen Zierelemente werden erst während des Heißprägens durch die Haftwirkung am Anbauteil von der restlichen Beschichtung gelöst und dadurch individualisiert. Die Form des Zierelements wird dabei durch die Gestaltung der Kontaktfläche des Stempels festgelegt. Die Zierelemente können aber auch bereits auf der Trägerfolie durch Perforation oder Einschnitte in der Gesamtbeschichtung individualisiert sein, wodurch das Ablösen erleichtert wird.

Der Stempel weist eine erhöhte Temperatur auf, welche sich auf die Trägerfolie und das Zierelement überträgt, wodurch das Anhaften des Zierelements am Anbauteil begünstigt wird. Der Stempel weist bevorzugt eine Temperatur von 120 °C bis 250 °C auf, besonders bevorzugt von 140 °C bis 200 °C. Damit werden besonders gute Ergebnisse erzielt. Die genaue Temperatur ist auch von der verwendeten Folie abhängig und kann vom Fachmann den Herstellerangaben entnommen oder durch routinemäßige Vorversuche ermittelt werden.

Die Kontaktfläche des Stempels enthält bevorzugt Silikon oder ist aus Silikon ausgebildet. Die Kontaktfläche kann aber auch natürlichen oder synthetischen Kautschuk oder andere Elastomere enthalten oder daraus ausgebildet sein. Der Vorteil liegt in der weichen Ausgestaltung der Kontaktfläche, wodurch Beschädigungen am Anbauteil vermieden werden können. Die Kontaktfläche kann aber auch aus Metall gefertigt sein.

In einer vorteilhaften Ausführung wirkt der Stempel mit einem Druck von 15 kg/cm² bis 50 kg/cm² auf die erste Oberfläche, bevorzugt von 20 kg/cm² bis 40 kg/cm², besonders bevorzugt von 25 kg/cm² bis 35 kg/cm². Damit wird ein besonders gutes Anhaften des Zierelements erreicht und das Anbauteil dennoch geschont.

Die Einwirkdauer des Stempels auf die erste Oberfläche zum Aufbringen des Zierelements beträgt bevorzugt mindestens 1 s, besonders bevorzugt mindestens 2 s. Die Einwirkdauer kann beispielsweise von 1 s bis 10 s, bevorzugt von 2 s bis 4 s betragen. Dies ist vorteilhaft im Hinblick auf einerseits eine gute Haftwirkung und andererseits ein kurze Taktzeit.

Das Zierelement ist bevorzugt folienartig ausgebildet. Das Zierelement ist besonders bevorzugt als mehrschichtige Folie ausgebildet. In einer besonders vorteilhaften Ausgestaltung umfasst das Zierelement zumindest eine Dekorschicht und eine Haftschicht. Die Schichten sind in der angegebenen Reihenfolge mit zunehmendem Abstand zur Trägerfolie auf der Trägerfolie angeordnet. Das Zierelement kommt über die Haftschicht mit dem Anbauteil in Kontakt. Ist das Zierelement auf das Anbauteil übertragen, so lautet die Reihenfolge mit zunehmendem Abstand zur ersten Oberfläche: Haftschicht - Dekorschicht.

Die Haftschicht bewirkt eine Adhäsion zwischen Zierelement und Anbauteil. Dadurch ist die Haftung zwischen Zierelement und Anbauteil stärker als zwischen Zierelement und Trägerfolie, wodurch sich das Zierelement von der Trägerfolie löst. Durch die Haftschicht wird das Zierelement dauerhaft stabil auf der Oberfläche der polymeren Materialphase fixiert. Die Haftschicht enthält in einer bevorzugten Ausgestaltung einen acrylbasierten Klebstoff. Dieser bewirkt eine besonders gute Haftung durch die Ausbildung von kovalenten Bindungen und Van-der-Waals-Kräften. Dieser Effekt ist besonders ausgeprägt, wenn das Anbauteil Polycarbonat enthält. Die Haftschicht kann alternativ aber auch andere geeignete Materialien enthalten, die eine Haftung begünstigen, beispielsweise Polyurethan oder Epoxidharz. Die Haftschicht weist bevorzugt eine Dicke von 0,1 µm bis 5,0 µm auf. Dadurch wird eine gute Haftwirkung erzielt, ohne die Dicke des Zierelements übermäßig zu erhöhen, wodurch der optische Eindruck verschlechtert würde. Die Haftschicht ist bevorzugt transparent, so dass die Sicht auf das Anbauteil nicht durch die Haftschicht gestört wird.

Die Dekorschicht trägt die eigentliche optische Wirkung des Zierelements. Sie kann daher auch als Farbschicht bezeichnet werden. Die Dekorschicht ist eine polymere Schicht, enthält also ein Polymer. Eine Vielzahl von Polymeren ist als Basismaterial für die Dekorschicht geeignet, beispielsweise Polymethylmethacrylat. Die Dekorschicht weist bevorzugt eine Dicke von 1,0 µm bis 10,0 µm auf. Um den optischen Eindruck des Zierelements zu erzeugen, kann die Dekorschicht beispielsweise mit einem Aufdruck versehen sein oder eingelagerte Farbmittel enthalten. Farbmittel sind Pigmente oder Farbstoffe, die anorganischer oder organischer Natur und bunt oder unbunt sein können. Geeignet als Druckfarbe oder Einlagerung sind beispielsweise temperaturstabile organische Pigmente oder Farbstoffe (wie Urethan-Acrylat-Polymere, Azofarbstoffe oder polycyclische Verbindungen) oder anorganische Pigmente (wie Kohlenstoff, Titandioxid, Ruß, Zinnober, Bismut- (Bismutvanadat), Spinellpigmente, Blei-, Quecksilber-, Zirkon-, Eisen-, Cadmium-, Kupfer-, Kobalt-, Nickel-, Chrompigmente; Aluminiumsilikate (Ultramarin)). Die Dekorschicht einfarbig oder mehrfarbig sein, unterschiedliche Schattierungen enthalten (beispielsweise unterschiedliche Graustufen), mit ganzflächigen oder partiellen Oberflächeneffekten ausgestaltet sein und/oder als Metallic-Effekt ausgeführt sein.

Die Dekorschicht kann die oberste Schicht des Zierelements sein und mit der zweiten Materialphase in Kontakt stehen. Bevorzugt enthält das mehrschichtige Zierelement aber außer der Haftschicht und der Dekorschicht eine Schutzschicht. Das Zierelement umfasst dann zumindest die Schutzschicht, die Dekorschicht und die Haftschicht, welche in der angegebenen Reihenfolge mit zunehmendem Abstand zur Trägerfolie auf der Trägerfolie angeordnet sind. Ist das Zierelement auf das Anbauteil übertragen, so lautet die Reihenfolge mit zunehmendem Abstand zur ersten Oberfläche: Haftschicht - Dekorschicht - Schutzschicht.

Die Schutzschicht schützt die Dekorschicht vor mechanischer Einwirkung während des Anspritzens der zweiten Materialphase. Die Schutzschicht ist bevorzugt ein Schutzlack. Die Schutzschicht enthält bevorzugt ein Acryl-Polymer, Polymethylmethacrylat (PMMA) oder Polyurethan (PU). Die Schutzschicht weist bevorzugt eine Dicke von 0,5 µm bis 5,0 µm auf, womit besonders gute Ergebnisse erzielt werden.

Die Gesamtdicke des Zierelements beträgt bevorzugt bis zu 100 µm, besonders bevorzugt von 2 µm bis 20 µm, ganz besonders bevorzugt von 4 µm bis 10 µm. Damit wird eine deutliche optische Wirkung erreicht.

Die Größe und Gestaltung des Zierelements kann den Anforderungen im Einzelfall entsprechend frei gewählt werden.

Die Trägerfolie weist typischerweise eine Dicke von 10 µm bis 500 µm, bevorzugt von 10 µm bis 50 µm, besonders bevorzugt von 15 µm bis 30 µm auf. Die Trägerfolie kann prinzipiell aber auch dicker sein (wodurch sie allerdings teurer wird) oder auch dünner (solange eine ausreichende Stabilität gewährleistet ist). Die Trägerfolie enthält bevorzugt Polyethylen-Terephthalat (PET), Polycarbonat (PC), Polybutylenterephthalat (PBT), Styrol-Acrylnitril (SAN) oder Gemische oder Copolymere davon wie beispielsweise Polycarbonat- Polybutylenterephthalat (PBT/PC). Dadurch wird eine ausreichende Stabilität erzielt.

In einer vorteilhaften Ausgestaltung ist zwischen der Trägerfolie und dem Zierelement eine Trennschicht angeordnet. Die Trennschicht erleichtert das Ablösen des Zierelements von der Trägerfolie nach dem Heißprägen. Die Trennschicht weist beispielsweise eine Dicke von 0,1 µm bis 5,0 µm auf.

In einer bevorzugten Ausführung wird zumindest die vom Zierelement abgewandte Oberfläche der transparenten polymeren Materialphase (die bestimmungsgemäße Außenfläche des Anbauteils) mit einer Schutzbeschichtung versehen. Es kann auch die gesamte Oberfläche des Anbauteils mit der Schutzbeschichtung versehen werden. Die Schutzbeschichtung erhöht die Haltbarkeit der Oberfläche, insbesondere deren Kratzfestigkeit und Witterungsstabilität, und verringert somit den Verschleiß. In einer bevorzugten Ausführung wird die Schutzbeschichtung mittels Flutbeschichtung (*flow coating*) aufgebracht. Dadurch kann eine homogene Beschichtung bei kurzen Taktzeiten erreicht werden. Alternativ sind aber auch andere Beschichtungsverfahren anwendbar, beispielsweise Tauch- oder Sprühbeschichtung oder *Inmould Coating-*Verfahren.

Die Schutzbeschichtung wird häufig auch als Kratzfestbeschichtung, Verschleißschutzlack oder mit dem englischsprachigen Begriff "hardcoat" bezeichnet. Bevorzugt werden Schutzbeschichtungen verwendet, die thermisch härtende oder UV-härtende Lacke enthalten, insbesondere auf Basis von Polysiloxanen, Polyacrylaten, Polymethacrylaten, Polyurethanen oder Gemischen oder Copolymeren davon. Die Schutzbeschichtung kann eine oder mehrere separat aufgebrachte Schichten aufweisen und hat bevorzugt eine Gesamtschichtdicke von 1 µm bis 50 µm, besonders bevorzugt von 2 µm bis 25 µm. Sie verleiht dem Anbauteil eine gute Kratzbeständigkeit, Witterungsbeständigkeit sowie chemische Resistenz. Die Schutzbeschichtung kann auch UV-Blocker, Konservierungsstoffe sowie Komponenten zur Erhöhung der Kratzfestigkeit, beispielsweise Nanopartikel enthalten. Zusätzlich kann die Schutzbeschichtung auch noch dekorative Funktionen, wie Glanz- oder Perleffekte wahrnehmen. Die Schutzbeschichtung wird nach dem Aufbringen bevorzugt durch Erhitzen und/oder UV-Strahlung ausgehärtet.

Die Schutzbeschichtung kann durch eine einzelne Schicht ausgebildet sein. Die Schutzbeschichtung kann aber auch mehrere einzelne Schichten ausweisen. Eine solche mehrschichtige Schutzbeschichtung umfasst unterhalb des eigentlichen *Hardcoat* bevorzugt eine haftvermittelnde Beschichtung, einen sogenannten *Primer.* "Unterhalb" bedeutet, dass der Primer zwischen Anbauteil und dem eigentlichen *Hardcoat* angeordnet ist. Der Primer enthält bevorzugt Polymethylmethacrylat, UV-Absorber und alkoholische Lösemittel. Die Schichtdicke des Primers beträgt beispielsweise von 0,2 µm bis 8,0 µm, bevorzugt von 1,0 µm bis 4,0 µm.

Die beiden Materialphasen des Anbauteils können prinzipiell aus jedem Polymer gefertigt sein, das eine ausreichende Stabilität gewährleistet. Die beiden Materialphasen des Anbauteils enthalten bevorzugt Polyethylen (PE), Polycarbonat (PC), Polypropylen (PP), Polystyrol, Polybutadien, Polynitril, Polyester, Polyurethan, Polymethylmethacrylat (PMMA), Polyacrylat, Polyamid, Polyethylenterephthalat (PET), Polybutylenterephthalat (PBT) Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC), PET/PC, PBT/PC oder Copolymere oder Gemische. Besonders bevorzugt sind PC, PMMA, SAN, ASA, PET oder Copolymere oder Gemische davon. Das ist besonders vorteilhaft im Hinblick auf die Transparenz, die Verarbeitung, die Festigkeit, die Witterungsbeständigkeit und die chemische Beständigkeit.

Das Materialphasen können anorganische oder organische Füllstoffe enthalten, bevorzugt SiO2, Al2O3, TiO2, Tonmineralien, Silikate, Zeolithe, Glasfasern, Kohlenstofffasern, Glaskugeln, organische Fasern und/oder Gemische davon. Die Füllstoffe können die Stabilität des Anbauteils weiter erhöhen. Zudem können die Füllstoffe den Anteil an polymeren Materialien verringern und so die Herstellungskosten vermindern.

Ist eine Materialphase opak, so enthält sie zumindest ein Farbmittel. Durch das Farbmittel wird die Opazität der Komponente erreicht. Als Farbmittel können anorganische oder organische Farbstoffe und/oder Pigmente verwendet werden. Das Farbmittel kann bunt oder unbunt sein. Geeignete Farbmittel sind dem Fachmann bekannt und können beispielsweise im *Colour Index* der *British Society of Dyers and Colourists* und der *American Association of Textile Chemists and Colorists* nachgeschlagen werden. Bevorzugt wird ein Schwarz-Pigment als Farbmittel verwendet, beispielsweise Pigmentruß (Carbon Black), Anilinschwarz, Beinschwarz, Eisenoxidschwarz, Spinellschwarz und/oder Graphit. Dadurch wird eine schwarze opake Materialphase erreicht.

Die Schichtdicke jeder Materialphase beträgt beispielsweise von 0,5 mm bis 20 mm. Insbesondere die transparente, nach außen gerichtete Materialphase sollte eine Schichtdicke von mindestens 1 mm aufweisen, um eine gute Stabilität des Zierelements zu gewährleisten. Die Schichtdicke der transparenten, nach außen gerichteten Materialphase beträgt bevorzugt von 1 mm bis 10 mm, besonders bevorzugt von 3 mm bis 7 mm. Die Schichtdicke der nicht nach außen gerichteten Materialphase beträgt bevorzugt von 0,5 mm bis 7 mm, besonders bevorzugt von 1 mm bis 5 mm.

Das Bereitstellen der ersten Materialphase und das Aufbringen der zweiten Materialphase erfolgen durch Spritzguss. Der Begriff "Spritzguss" ist im Sinne der Erfindung breit auszulegen und umfasst alle Verfahren, bei denen verflüssigtes polymeres Material in eine formgebende Kavität eingespritzt und ausgehärtet wird. Es schließt neben dem klassischen Spitzgießen auch Weiterentwicklungen wie das Spritzprägen ein. Eine Trägerform, welche einen Teil der formgebenden Kavität bildet und das Anbauteil während seiner Herstellung trägt, wird bevorzugt zwischen den beiden Spritzguss-Vorrichtungen zum Erzeugen der beiden Materialphasen bewegt, beispielsweise mittels Wendeplatten-, Drehteller- oder Indexplattentechnologie, bevorzugt mittels einer Wendeplatte oder eines Drehwürfels. Damit wird die erste polymere Materialphase zwischen den Verfahrensschritten (a) und (c) bewegt. Zwischen den beiden Spitzguss-Schritten zum Erzeugen der ersten und der zweiten Materialphase wird eine Heißpräge-Vorrichtung relativ zur ersten Materialphase bewegt und angeordnet, so dass die erste Materialphase mit dem Zierelement versehen werden kann. Die Relativbewegung kann durch Bewegung der ersten Materialphase oder der Heißpräge-Vorrichtung erfolgen, prinzipiell auch durch eine Kombination von beidem.

Die Erfindung umfasst außerdem eine Vorrichtung, die zur Durchführung des beschriebenen Verfahrens geeignet ist. Die erfindungsgemäße Vorrichtung zur Herstellung eines polymeren Fahrzeug-Anbauteils umfasst eine Trägerform, ein Mittel zum Herstellen einer ersten polymeren Materialphase in der Trägerform beziehungsweise in einer unter Verwendung der Trägerform gebildeten Kavität, ein Heißprägemittel, das relativ zur bereitgestellten ersten Materialphase so positionierbar ist, dass eine erste Oberfläche der ersten Materialphase mit einem Zierelement beprägbar ist, und ein Mittel zum Herstellen einer zweiten polymeren Materialphase auf der ersten Oberfläche der ersten Materialphase. Die Trägerform ist eine Form, in oder an der das Anbauteil in den Phasen seiner Herstellung angeordnet ist und durch welches es dabei getragen wird.

Das Mittel zum Herstellen der ersten polymeren Materialphase ist eine erste Spritzgusseinrichtung und das Mittel zum Herstellen der zweiten polymeren Materialphase ist eine zweite Spritzgusseinrichtung. Die Spritzgusseinrichtungen umfassen jeweils Mittel zum Verflüssigen und Einspritzen einer Polymermasse sowie eine Form, die geeignet ist, mit der Trägerform zusammenzuwirken, um die vollständige Spritzgussform (Kavität) zu bilden, welche die

Geometrie des zu erzeugenden Werkstücks bestimmt. Die Trägerform ist beweglich gelagert und die Anordnung der beiden Spritzgusseinrichtungen ist so gewählt, dass die Trägerform von einer ersten, der ersten Spritzgusseinrichtung zugeordneten Position in eine zweite, der zweiten Spritzgusseinrichtung zugeordnete Position bewegbar ist. Die Vorrichtung umfasst Mittel zur Bewegung der Trägerform von der ersten in die zweite Position. Eine Position gilt dann als einer Spritzgusseinrichtung zugeordnet, wenn sie zum Einfüllen der Spritzgussmasse mittels der besagten Spritzgusseinrichtung in die Trägerform beziehungsweise in die aus der Trägerform und der Gegenform der Spritzgusseinrichtung gebildete Kavität geeignet ist. Dem eigentlichen Einspritzvorgang geht hierbei typischerweise eine Relativbewegung der Spritzgusseinrichtung hin zur Trägerform voraus, um mit dieser in Kontakt zu kommen, wobei die eigentliche Spritzgussform (Kavität) gebildet wird.

Die Positionierung des Heißprägemittels relativ zur ersten Materialphase kann durch Bewegung des Heißprägemittels oder der Spritzgussform erfolgen, prinzipiell auch durch eine Kombination von beidem.

In einer ersten bevorzugten Ausführungsform ist die Spritzgussform auf einer Wendeplatte gelagert, die um eine Raumachse rotierbar ist. Üblicherweise sind die beiden Spritzgusseinrichtungen gegenüber voneinander angeordnet, so dass die auf einer Seite der Wendeplatte angeordnete Trägerform durch eine Drehung von etwa 180° von der ersten Position in die zweite Position bewegbar ist. Auf der anderen Seite der Wendeplatte ist typischerweise eine weitere Trägerform angeordnet. Wird die Wendeplatte rotiert, um die erste Trägerform nach dem Einspritzen der ersten Materialphase in die zweite Position zu bewegen, so gelangt die zweite Trägerform automatisch in die erste Position, so dass zeitgleich mit dem Herstellen der zweiten Materialphase in der ersten Trägerform bereits die erste Materialphase des nächsten Anbauteils in die zweite Trägerform eingespritzt werden kann. Das Heißprägemittel ist beweglich auf einem Fördersystem gelagert und kann zwischen die erste Spritzgusseinrichtung und die Trägerform oder zwischen die zweite Spritzgusseinrichtung und die Trägerform eingefahren werden, um das Zierelement vor dem Aufspritzen der zweiten Materialphase auf die erste Materialphase aufzubringen. Das Anbauteil wird nach dem Formen der zweiten Materialphase aus der Trägerform entnommen werden. Danach steht die Trägerform für den nächsten Zyklus bereit.

In einer zweiten bevorzugten Ausführung ist die Trägerform auf einem Drehwürfel gelagert, der um eine Raumachse rotierbar ist. Die beiden Spritzgusseinrichtungen sind bevorzugt einander gegenüberliegend angeordnet. Das Heißprägemittel ist im Wesentlichen senkrecht zur Achse zwischen den Spritzgusseinrichtungen angeordnet. Die auf einer Seite des Drehwürfels angeordnete Trägerform kann von einer ersten, der ersten Spritzgusseinrichtung zugeordneten Position durch eine Drehung von etwa 90° in eine zweite, dem Heißprägemittel zugeordneten Position gebracht werden, die dazu geeignet ist, das Zierelement mit dem Heißprägemittel auf die erste Materialphase aufzubringen. Durch eine weitere Drehung um etwa 90° kann die Trägerform in eine dritte, der zweiten Spritzgusseinrichtung zugeordnete Position bewegt werden. Eine weitere Drehung um etwa 90° bewegt die Trägerform in eine vierte Position, die bevorzugt dazu verwendet wird, das Anbauteil aus der Trägerform zu entnehmen. Bevorzugt sind auf den anderen Seiten des Drehwürfels weitere Trägerformen angeordnet, so dass mehrere der besagten Position gleichzeitig durch verschiedene Trägerformen besetzt sind und somit mit der Herstellung eines Anbauteils begonnen wird, bevor die Herstellung der vorhergehenden Anbauteile abgeschlossen ist. Statt eines Drehwürfels können grundsätzlich auch andere drehbare Werkzeuge verwendet werden, beispielsweise eine Platte auf einem Drehteller, wobei hier weniger Trägerformen angeordnet werden können.

Die beschriebenen Ausführungen sind wirtschaftliche Herstellungsverfahren, die sich insbesondere für eine Massenproduktion eignen.

Die erfindungsgemäße Vorrichtung ist zur Durchführung des beschriebenen Verfahrens geeignet und das Verfahren wird bevorzugt mit der erfindungsgemäßen Vorrichtung durchgeführt. Die vorstehend im Zusammenhang mit dem Verfahren beschriebenen Details gelten daher in gleicher Weise für die Vorrichtung und umgekehrt.

Die Erfindung umfasst außerdem ein polymeres Fahrzeug-Anbauteil mit Zierelement, umfassend eine erste polymere Materialphase, eine zweite polymere Materialphase und ein zwischen den beiden polymeren Materialphasen angeordnetes Zierelement, das mittels Heißprägen auf eine erste Oberfläche der ersten polymeren Materialphase oder der zweiten polymeren Materialphase aufgebracht ist, wobei mindestens die erste polymere Materialphase oder die zweite polymere Materialphase transparent ist und wobei die erste polymere Materialphase und die zweite polymere Materialphase durch Spritzguss erzeugt sind. Das erfindungsgemäße polymere Anbauteil ist insbesondere mit dem erfindungsgemäßen Verfahren hergestellt oder herstellbar. Das Zierelement ist an der Grenzfläche zwischen erster und zweiter Materialphase angeordnet.

Die vorstehend im Zusammenhang mit dem Verfahren und der Vorrichtung beschriebenen Details und bevorzugten Ausgestaltungen gelten in gleicher Weise für das erfindungsgemäße Fahrzeug-Anbauteil. Insbesondere weist das Anbauteil mindestens auf der vom Zierelement abgewandten Oberfläche der transparenten Materialphase die beschriebene Schutzbeschichtung auf.

Die Erfindung umfasst außerdem die Verwendung des erfindungsgemäßen polymeren Fahrzeug-Anbauteils als Kühlergrillverkleidung, Säulenabdeckung, Blende, Dachpanel, Fahrzeugscheibe, Leuchtenabdeckung, Spiegelgehäuse, Rahmenelement, Seitenleiste, Schweller, Spoiler, Armatur oder Schalttafel. Aufgrund ihrer hohen Witterungsstabilität und Kratzfestigkeit eignen sich die erfindungsgemäßen Fahrzeug-Anbauteile insbesondere als Außenanbauteile und werden bevorzugt als solche verwendet, beispielsweise als Kühlergrillverkleidung, Säulenabdeckung, Blende, Dachpanel, Fahrzeugscheibe, Leuchtenabdeckung, Spiegelgehäuse, Rahmenelement, Seitenleiste, Schweller oder Spoiler, können aber auch im Fahrzeuginnenraum Verwendung finden, beispielsweise als Armatur oder Schalttafel. Bei der erfindungsgemäßen Verwendung ist die transparente Materialphase des Anbauteils nach außen gewandt - die vom Zierelement abgewandte Oberfläche der transparenten Materialphase bildet also die Außenfläche des Anbauteils, während das Anbauteil über die opake Materialphase, sofern eine solche vorhanden ist, am Fahrzeug befestigt ist.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine schrittweise Darstellung einer Ausführung des erfindungsgemäßen Verfahrens,
- Fig. 2: einen Querschnitt durch eine Ausgestaltung einer Trägerfolie mit Zierelement,
- Fig. 3: einen Querschnitt durch eine Ausgestaltung des erfindungsgemäßen polymeren Anbauteils mit Zierelement,
- Fig. 4: einen Querschnitt durch eine Ausgestaltung der erfindungsgemäßen Vorrichtung während des erfindungsgemäßen Verfahrens in einer schrittweisen Darstellung,
- Fig. 5: eine Draufsicht auf eine weitere Ausgestaltung der erfindungsgemäßen Vorrichtung und
- Fig. 6: ein Ausführungsbeispiel des erfindungsgemäßen Verfahrens anhand eines Flussdiagramms.

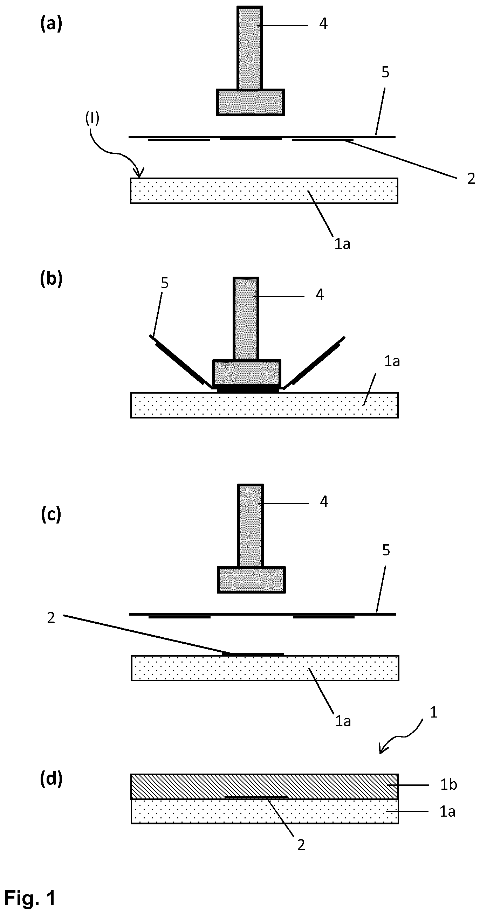

Figur 1 zeigt einen Querschnitt eines polymeren Anbauteils 1 zu verschiedenen Zeitpunkten des erfindungsgemäßen Verfahrens zu seiner Herstellung: (a) vor dem Heißprägen der ersten Materialphase 1a, (b) während des Heißprägens, (c) nach dem Heißprägen und (d) nach dem Aufbringen der zweiten Materialphase 1b. Das polymere Anbauteil 1 ist beispielsweise ein Kunststofffenster für ein Kraftfahrzeug, beispielsweise eine hintere Seitenscheibe. Das polymere Anbauteil 1 kann aber auch ein anderes Anbauteil eines Fahrzeugs sein, beispielsweise eine Säulenabdeckung, ein Spoiler oder eine Leuchtenabdeckung.

Zunächst wird eine erste Materialphase 1a im Spritzgussverfahren hergestellt, beispielsweise eine transparente scheiben- oder plattenartige Materialphase mit einer Dicke von 4 mm aus Polycarbonat. Die transparente erste Materialphase 1a wird dann vor einem Stempel 4 positioniert (Fig. 1(a)), wobei eine erste Oberfläche I der Materialphase 1a dem Stempel 4 zugewandt ist. Zwischen Stempel 4 und Materialphase 1a wird ein Zierelement 2 auf einer Trägerfolie 5 positioniert. Die Trägerfolie 5 ist eine Folienbahn mit einer Vielzahl von Zierelementen 2, welche auf zwei nicht dargestellte Rollen aufgewickelt ist. Dadurch kann die Trägerfolie 5 weitertransportiert werden, so dass ein weiteres Zierelement 2 unter den Stempel 4 befördert wird und zum Aufbringen auf eine weitere Materialphase 1a bereitgestellt wird.

Das Zierelement 2 ist als mehrschichtige Folie ausgebildet, welche nachstehend genauer beschrieben wird. Des besseren Verständnisses halber sind die verschiedenen Zierelemente 2 als diskrete Elemente auf der Trägerfolie 5 dargestellt. Es ist aber auch möglich, dass die mehrschichtige Folie die Trägerfolie 5 im Wesentlichen vollflächig bedeckt, wobei sich die einzelnen Zierelemente 2 durch die Haftwirkung an der ersten Materialphase 1a von der Gesamtfolie lösen. Dieses Ablösen kann auch durch Einschnitte oder Perforationen in der Gesamtfolie erleichtert werden.

Der Stempel 4 wirkt auf die vom Zierelement 2 abgewandte Oberfläche der Trägerfolie 5 ein, so dass das Zierelement 2 an die erste Oberfläche I der Materialphase 1a angedrückt wird (Fig. 1(b)), beispielsweise mit einem Druck von 30 kg/cm². Der Stempel 4 hat dabei eine Temperatur von beispielsweise etwa 160°C. Die Einwirkdauer des Stempels 4 auf die Oberfläche I beträgt beispielsweise 2,5 s. Das Einwirken des Stempels 4 wird typischerweise durch ein Andrücken desselben an die Materialphase 1a erreicht, kann aber alternativ oder zusätzlich durch ein Andrücken der Materialphase 1a gegen den Stempel 4 erreicht werden.

Anschließend werden Stempel 4 und Materialphase 1a wieder voneinander gelöst und die Trägerfolie 5 abgezogen, wobei das Zierelement 2 auf der Oberfläche I der Materialphase 1a verbleibt (Fig. 1(c)).

Anschließend wird eine zweite Materialphase 1b auf die erste Oberfläche der ersten Materialphase 1a im Spritzgussverfahren aufgebracht, so dass das Zierelement 2 an der Grenzfläche zwischen erster Materialphase 1a und zweiter Materialphase 1b angeordnet ist (Fig. 1(d)). Dadurch entsteht das erfindungsgemäße Anbauteil 1. Die opake Phase besteht beispielsweise aus einem durch Pigmente schwarz gefärbten PC/ABS-Gemisch und weist eine Dicke von 2,5 mm auf.

Das Anbauteil 1 kann anschließend mit einer Schutzbeschichtung versehen werden, welche beispielsweise zweischichtig ausgeführt ist und einen acrylbasierten Primer und ein darauf aufgebachtes Polysiloxan-basiertes *Hardcoat* umfasst. Eine solche Schutzbeschichtung sollte zumindest auf die vom Zierelement angewandten Oberfläche der transparenten ersten Materialphase 1a aufgebracht werden, welche später in Einbaulage als Außenfläche vorgesehen ist, um die Kratzfestigkeit und Witterungsstabilität zu erhöhen.

Das Zierelement 2 ist durch die transparente erste Materialphase 1a später in Einbaulage stets gut zu erkennen. Durch die Kombination von transparenter Materialphase 1a, dahinter liegender opaker zweiter Materialphase 1b und dem Zierelement 2 an der Grenzfläche der beiden Materialphasen 1a, 1b wird ein glasartiger optischer Eindruck mit hoher Tiefenwirkung erreicht. Die Herstellung ist für eine industrielle Massenfertigung geeignet, das Zierelement 2 ist im Inneren des Anbauteils 1 vor Beschädigung geschützt und die hohen Stabilitätsanforderungen an Fahrzeugbauteile werden erfüllt (Scheiben aus starrem Kunststoff, ECE R43 Anhang 14, Klasse /M). Das sind große Vorteile der vorliegenden Erfindung.

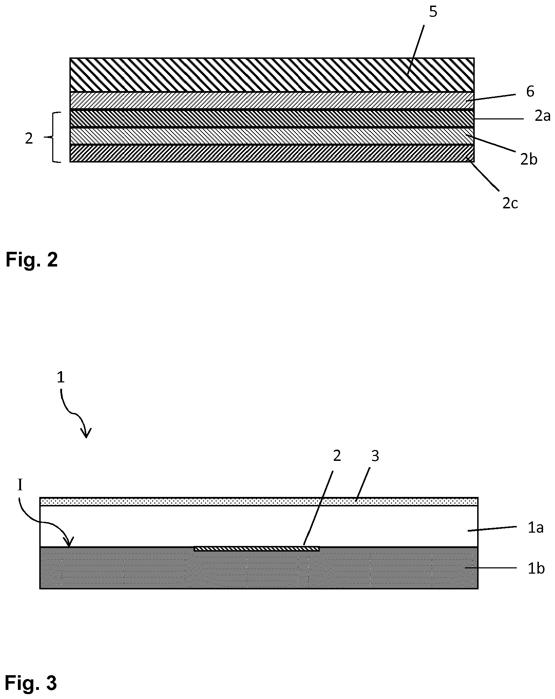

Figur 2 zeigt beispielhaft den Aufbau einer geeigneten Trägerfolie 5 mit Zierelement 2. Die Trägerfolie besteht aus PET und weist eine Dicke von 20 µm auf. Das Zierelement 2 besteht aus drei Schichten, nämlich mit zunehmendem Abstand von der Trägerfolie: eine Schutzschicht 2a, eine Dekorschicht 2b und eine Haftschicht 2c. Das Zierelement 2 tritt über die Haftschicht 2c mit der ersten Materialphase 1a in Kontakt. Die Haftschicht 2c bewirkt eine starke Adhäsion zwischen Zierelement 2 und Materialphase 1a. Die Haftschicht 2c ist beispielsweise eine Schicht eines acrylbasierten Klebstoffs mit einer Dicke von 1,0 µm. Die Dekorschicht 2b bewirkt den eigentlichen optischen Eindruck des Zierelements 2. Die Dekorschicht 2b ist beispielsweise eine Schicht mit einer Dicke von 5,0 µm basierend auf Polyacrylat, die durch eingelagerte oder aufgedruckte Pigmente oder Farbstoffe in Form der gewünschten Verzierung eingefärbt ist. Die Schutzschicht 2a ist beispielsweise eine acrylbasierte Polymerschicht mit einer Dicke von 1,0 µm. Die Schutzschicht 2a schützt die Dekorschicht vor mechanischer Beschädigung, wenn das Zierelement 2 auf die erste Materialphase 1a aufgebracht ist.

Zwischen der Trägerfolie 5 und dem Zierelement 2 ist eine Trennschicht 6 angeordnet, welche das Ablösen des Zierelements 2 von der Trägerfolie 5 begünstigt. Die Trennschicht weist beispielsweise eine Dicke von 0,5 µm auf.

Figur 3 zeigt einen Querschnitt durch ein erfindungsgemäßes Anbauteil 1 mit Zierelement 2. Das Anbauteil 1 besteht aus einer transparenten Materialphase 1a und einer opaken Materialphase 1b. Ein solcher Aufbau tritt beispielsweise im Randbereich von Fensterscheiben oder ganzflächig bei Säulenabdeckungen auf. In letzterem Fall erzeugt die transparente Phase einen glasartigen Effekt mit Tiefenwirkung auf der Oberfläche der opaken Phase, was optisch sehr ansprechend ist. Die transparente Materialphase 1a besteht beispielsweise aus Polycarbonat (PC) und weist eine Dicke von 4 mm auf. Die opake Materialphase 1b besteht beispielsweise aus einem durch Pigmente wie Carbon Black schwarz gefärbten PC/ABS-Gemisch und weist eine Dicke von 2,5 mm auf. Die transparente Materialphase 1a soll in Einbaulage der äußeren Umgebung zugewandt sein. Das Zierelement 2 ist dann durch die transparente Materialphase 1a hindurch vor der opaken Materialphase 1b gut zu erkennen.

Die vom Zierelement abgewandte Oberfläche der ersten Materialphase 1a, welche die bestimmungsgemäße Außenfläche des Anbauteils 1 bildet, ist mit einer Schutzbeschichtung 3 versehen, wodurch sie vor mechanischer Beschädigung geschützt wird. Die Schutzbeschichtung enthält auch UV-Blocker, wodurch das Zierelement 2 vor Ausbleichen infolge von UV-Bestrahlung geschützt wird. Die Dicke der Schutzbeschichtung 3 beträgt beispielsweise etwa 20 µm.

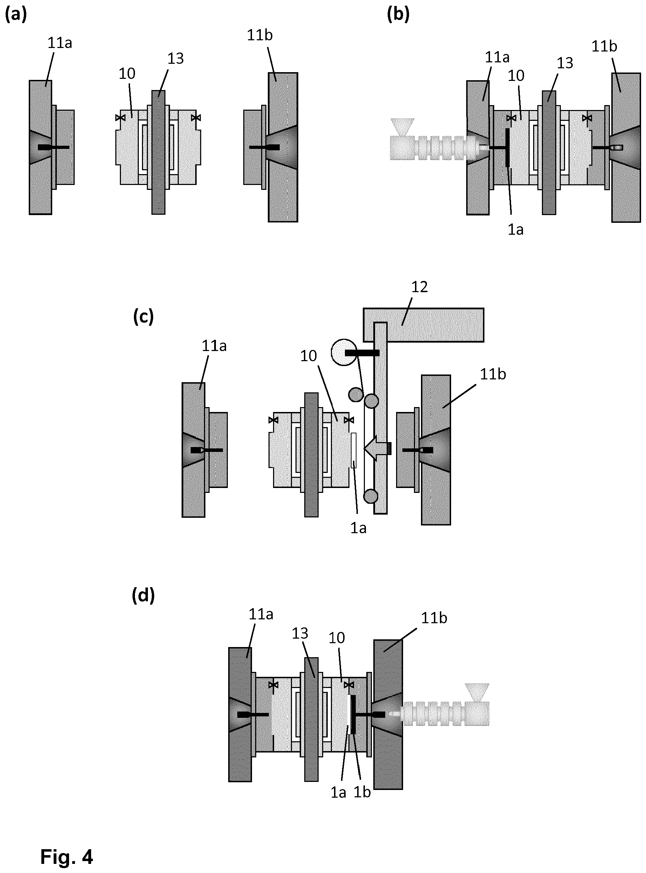

Figur 4 zeigt einen Querschnitt durch eine erfindungsgemäße Vorrichtung zur Herstellung eines polymeren Fahrzeug-Anbauteils 1 zu verschiedenen Zeitpunkten des erfindungsgemäßen Verfahrens. Die Vorrichtung umfasst eine erste Spritzgusseinrichtung 11a zur Erzeugung der transparenten ersten Materialphase 1a und eine zweite Spritzgusseinrichtung 11b zur Erzeugung der opaken zweiten Materialphase 1b. Die beiden Spritzgusseinrichtungen 11a, 11b sind einander gegenüberliegend angeordnet. Zwischen den Spritzgusseinrichtungen 11a, 11b ist eine Wendeplatte 13 angeordnet, die auf einer Seite eine Trägerform 10 trägt. Auf der gegenüberliegenden Seite der Wendeplatte 13 ist eine weitere Trägerform angeordnet. Die Spritzgusseinrichtungen 11a, 11b und die Trägerformen 10 sind im Ausgangsstadium voneinander beabstandet angeordnet (Fig. 4(a)).

Die Spritzgusseinrichtungen 11a, 11b werden dann an die Trägerformen 10 angenähert und in Kontakt gebracht. Aus der Trägerform 10 und einer Gegenform der ersten Spritzgusseinrichtung 11a wird dabei eine Kavität ausgebildet, deren Form der gewünschten Form der ersten Materialphase 1a entspricht. Durch die Spritzgusseinrichtung 11a wird anschließend verflüssigtes transparentes Polymer in die Kavität eingespritzt, welches aushärtet, wodurch die transparente Materialphase 1a entsteht (Fig. 4(b)).

Die Spritzgusseinrichtungen 11a, 11b werden dann von den Trägerformen 10 entfernt und die Wendeplatte 13 um 180° rotiert, so dass die Trägerform 10 mit der ersten Materialphase 1a der zweiten Spitzgusseinrichtung 11b zugewandt ist. Über ein Fördersystem wird dann ein Heißprägemittel 12 in den Zwischenraum zwischen erster Materialphase 1a und zweiter Spritzgusseinrichtung 11b eingefahren (Fig. 4(c)). Mit dem Heißprägemittel 12 wird die erste Oberfläche I der ersten Materialphase 1a mit einem Zierelement 2 versehen. Dann wird das Heißprägemittel 12 wieder aus dem Zwischenraum entfernt. Das Heißprägemittel 12 kann alternativ auch in den Zwischenraum zwischen der ersten Spritzgusseinrichtung 11a und der Trägerform 10 eingefahren werden, um das Zierelement bereits vor der Rotation der Wendeplatte 13 aufzubringen.

Die Spritzgusseinrichtungen 11a, 11b werden dann wieder an die Trägerformen 10 angenähert und in Kontakt gebracht. Aus der Trägerform 10 und einer Gegenform der zweiten Spritzgusseinrichtung 11b wird dabei eine Kavität ausgebildet, deren Form der gewünschten Form der zweiten Materialphase 1b entspricht. Durch die Spritzgusseinrichtung 11b wird anschließend verflüssigtes opakes Polymer in die Kavität eingespritzt, welches aushärtet, wodurch auf der transparenten ersten Materialphase 1a die opake transparente Materialphase 1a entsteht (Fig. 4(b)), wobei das Zierelement 2 an der Grenzfläche zwischen den beiden Materialphasen 1a, 1b angeordnet ist. Die zweite Materialphase 1b härtet aus und die Die Spritzgusseinrichtungen 11a, 11b werden dann von den Trägerformen 10 entfernt. Das fertige Anbauteil 1 kann dann aus der Trägerform 10 entnommen werden.

Die weitere Trägerform auf der anderen Seite der Wendeplatte 13 ist jeweils der anderen Spritzgusseinrichtung zugeordnet. So können verschiedene Verfahrensschritte bei der Herstellung zweier aufeinander folgender Anbauteile simultan durchgeführt werden: während der Herstellung der ersten Materialphase 1a eines Anbauteils a wird zeitgleich die zweite Materialphase des vorhergehenden Anbauteils gespritzt. Nach Rotation der Wendeplatte 13 wird dann die zweite Materialphase 1b des besagten Anbauteils zeitgleich mit der ersten Materialphase des darauffolgenden Anbauteils gespritzt. Damit können hohe Taktzeiten erreicht werden.

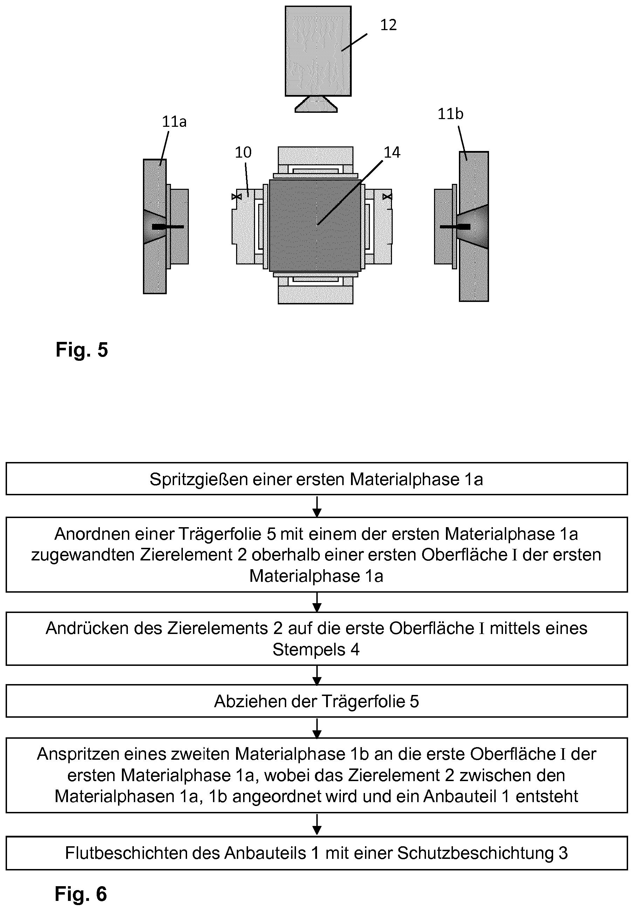

Figur 5 zeigt eine Draufsicht auf eine weitere Ausgestaltung der erfindungsgemäßen Vorrichtung. Anstatt einer Wendeplatte 13 ist die Trägerform hier auf einem Drehwürfel 14 angeordnet, welcher in Schritten von jeweils 90° rotierbar ist.

Die Vorrichtung umfasst auch hier eine erste Spritzgusseinrichtung 11a und eine zweite Spritzgusseinrichtung 11b, die einander gegenüberliegend entlang einer Verbindungsachse angeordnet sind. Senkrecht zur dieser Verbindungsachse ist das Heißprägemittel 12 angeordnet. Die Trägerform 10 befindet sich in einer ersten Position der ersten Spritzgusseinrichtung 11a zugewandt. Nach Annäherung der ersten Spritzgusseinrichtung 11a an die Trägerform 10 wird die erste Materialphase 1a erzeugt. Eine Rotation des Drehwürfels 14 um 90° bewegt die Trägerform 10 in eine zweite Position, in der sie dem Heißprägemittel 12 zugewandt ist. So wird die erste Materialphase 1a mit dem Zierelement 2 versehen. Eine weitere Rotation des Drehwürfels 14 um 90° bewegt die Trägerform 10 in eine dritte Position, in der sie der zweiten Spritzgusseinrichtung 11b zugewandt ist. Nach Annäherung der zweiten Spritzgusseinrichtung 11b an die Trägerform 10 wird die zweite Materialphase 1b auf der ersten Materialphase 1a erzeugt. Nach einer weiteren Rotation um 90° gelangt die Trägerform 10 in eine vierte Position, in der das fertige Anbauteil 1 aus der Trägerform entnommen werden kann.

Auch hier sind die übrigen drei Seiten des Drehwürfels 14 mit weiteren Trägerformen ausgestattet, die die jeweils anderen Positionen besetzten, so dass die Vorrichtung an vier verschiedenen Anbauteilen simultan arbeiten kann.

Figur 6 zeigt ein Flussdiagramm eines Ausführungsbeispiels des erfindungsgemäßen Verfahrens zur Herstellung eines polymeren Fahrzeug-Anbauteils mit Zierelement.

### Bezugszeichenliste:

- (1): polymeres Fahrzeug-Anbauteils
- (1a): erste polymere Materialphase von 1
- (1b): zweite polymere Materialphase von 1

- (2): Zierelement
- (2a): Schutzschicht von 2
- (2b): Dekorschicht von 2
- (2c): Haftschicht von 2

- (3): Schutzbeschichtung
- (4): Stempel
- (5): Trägerfolie
- (6): Trennschicht

- (10): Trägerform
- (11a): erste Spritzgusseinrichtung
- (11b): zweite Spritzgusseinrichtung
- (12): Heißprägemittel
- (13): Wendeplatte
- (14): Drehwürfel

- (I): erste Oberfläche von 1a

## Patentansprüche

1. Verfahren zur Herstellung eines polymeren Fahrzeug-Anbauteils (1) mit Zierelement, wobei
a. eine erste polymere Materialphase (1a) bereitgestellt wird,
b. ein Zierelement (2) durch Heißprägen mittels eines Stempels (4) von einer Trägerfolie (5) auf eine erste Oberfläche (I) der ersten polymeren Materialphase (1a) übertragen wird und
c. auf der ersten Oberfläche (I) der ersten polymeren Materialphase (1a) eine zweite polymere Materialphase (1b) aufgebracht wird, so dass das Zierelement (2) zwischen der ersten polymeren Materialphase (1a) und der zweiten polymeren Materialphase (1b) angeordnet wird,
wobei mindestens die erste polymere Materialphase (1a) oder die zweite polymere Materialphase (1b) transparent ist und wobei das Bereitstellen der ersten Materialphase (1a) und das Aufbringen der zweiten Materialphase (1b) durch Spritzguss erfolgen.

2. Verfahren nach Anspruch 1, wobei in Verfahrensschritt (b)
- die Trägerfolie (5) mit dem Zierelement (2) so angeordnet wird, dass das Zierelement (2) der ersten polymeren Materialphase (1a) zugewandt ist,
- der Stempel (4) auf die vom Zierelement (2) abgewandte Oberfläche der Trägerfolie (5) einwirkt, so dass das Zierelement (2) gegen die erste Oberfläche (I) angedrückt wird, und
- die Trägerfolie (5) abgezogen wird, wobei das Zierelement (2) auf der ersten Oberfläche (I) verbleibt.

3. Verfahren nach Anspruch 1 oder 2, wobei eine der beiden polymeren Materialphasen (1a, 1b) opak ist.

4. Verfahren nach Anspruch 3, wobei die erste polymere Materialphase (1a) transparent ist und die zweite polymere Materialphase (1b) opak.

5. Verfahren nach einem der Ansprüche 1 bis 4, wobei die erste polymere Materialphase (1a) und die zweite polymere Materialphase (1b) durch Spritzguss erzeugt werden und wobei die erste polymere Materialphase (1a) zwischen den Verfahrensschritten (a) und (c) mittels einer Wendeplatte (13) oder eines Drehwürfels (14) bewegt wird.

6. Verfahren nach einem der Ansprüche 1 bis 5, wobei das Zierelement (2) eine Schutzschicht (2a), eine Dekorschicht (2b) und eine Haftschicht (2c) umfasst, die in dieser Reihenfolge auf der Trägerfolie (5) angeordnet sind, und wobei zwischen der Trägerfolie (5) und dem Zierelement (2) eine Trennschicht (6) angeordnet ist.

7. Verfahren nach einem der Ansprüche 1 bis 6, wobei zumindest die vom Zierelement (2) abgewandte Oberfläche der transparenten polymeren Materialphase (1a, 1b) mit einer Schutzbeschichtung (3) versehen wird, die bevorzugt thermisch härtende oder UV-härtende Lacke, besonders bevorzugt Polysiloxane, Polyacrylate, Polymethacrylate, Polyurethane oder Gemische oder Copolymere davon enthält.

8. Verfahren nach einem der Ansprüche 1 bis 7, wobei der Stempel (4) in Verfahrensschritt (b) eine Temperatur von 120 °C bis 250 °C aufweist, bevorzugt von 140 °C bis 200 °C.

9. Verfahren nach einem der Ansprüche 1 bis 8, wobei der Stempel mit einem Druck von 15 kg/cm² bis 50 kg/cm² auf die erste Oberfläche (I) wirkt, bevorzugt von 20 kg/cm² bis 40 kg/cm², besonders bevorzugt von 25 kg/cm² bis 35 kg/cm², mit einer Einwirkdauer von mindestens 1 s, bevorzugt von 1 s bis 10 s, besonders bevorzugt von 2 s bis 4 s.

10. Verfahren nach einem der Ansprüche 1 bis 9, wobei die Materialphasen (1a, 1b) Polycarbonat, Polymethylmethacrylat, Styrol-Acrylnitril, Acrylester-Styrol-Acrylnitril, Polyethylenterephthalat oder Copolymere oder Gemische enthalten.

11. Vorrichtung zur Herstellung eines polymeren Fahrzeug-Anbauteils (1) mit Zierelement, mindestens umfassend
- eine Trägerform (10),
- ein Mittel zum Herstellen einer ersten polymeren Materialphase (1a),
- ein Heißprägemittel (12), dass relativ zur ersten polymeren Materialphase (1a) so positionierbar ist, dass eine erste Oberfläche (I) der ersten Materialphase (1a) mit einem Zierelement (2) beprägbar ist, und
- ein Mittel zum Herstellen einer zweiten polymeren Materialphase (1b) auf der ersten Oberfläche (I) der ersten Materialphase (1a),
wobei das Mittel zum Herstellen der ersten polymeren Materialphase (1a) eine erste Spritzgusseinrichtung (11a) und das Mittel zum Herstellen der zweiten polymeren Materialphase (1b) eine zweite Spritzgusseinrichtung (11b) ist, und wobei
- die erste Spritzgusseinrichtung (11a) und die zweite Spritzgusseinrichtung (11b) einander gegenüberliegend angeordnet sind,
- die Trägerform (10) mittels einer Wendeplatte (13) von einer ersten, der ersten Spritzgusseinrichtung (11a) zugeordneten Position in eine zweite, der zweiten Spritzgusseinrichtung (11b) zugeordnete Position bewegbar ist und
- das Heißprägemittel (12) beweglich auf einem Fördersystem gelagert ist und zwischen die erste Spritzgusseinrichtung (11a) und die Trägerform (10) oder zwischen die zweite Spritzgusseinrichtung (11b) und die Trägerform (10) einfahrbar ist,
oder
- die erste Spritzgusseinrichtung (11a) und die zweite Spritzgusseinrichtung (11b) einander gegenüberliegend angeordnet sind,
- das Heißprägemittel (12) im Wesentlichen senkrecht zur Achse zwischen den Spritzgusseinrichtungen (11a, 11b) angeordnet ist,
- die Trägerform (10) mittels eines Drehwürfels (14) von einer ersten, der ersten Spritzgusseinrichtung (11a) zugeordneten Position über eine zweite, dem Heißprägemittel (12) zugeordnete Position in eine dritte, der zweiten Spritzgusseinrichtung (11b) zugeordnete Position bewegbar ist.

12. Polymeres Fahrzeug-Anbauteil (1) mit Zierelement, hergestellt mit dem Verfahren nach einem der Ansprüche 1 bis 10, mindestens umfassend eine erste polymere Materialphase (1a), eine zweite polymere Materialphase (1b) und ein zwischen den beiden polymeren Materialphasen (1a, 1b) angeordnetes Zierelement (2), das mittels Heißprägen auf eine erste Oberfläche (I) der ersten polymeren Materialphase (1a) aufgebracht ist, wobei mindestens die erste polymere Materialphase (1a) oder die zweite polymere Materialphase (1b) transparent ist und wobei die erste polymere Materialphase (1a) und die zweite polymere Materialphase (1b) durch Spritzguss erzeugt sind.

13. Verwendung eines polymeren Fahrzeug-Anbauteils nach Anspruch 12 in Fahrzeugen, wobei die transparente polymere Materialphase (1a, 1b) nach außen gewandt ist, bevorzugt als Kühlergrillverkleidung, Säulenabdeckung, Blende, Dachpanel, Fahrzeugscheibe, Leuchtenabdeckung, Spiegelgehäuse, Rahmenelement, Seitenleiste, Schweller, Spoiler, Armatur oder Schalttafel.

## Claims

1. Method for producing a polymeric vehicle add-on part (1) with a decorative element, wherein
a. a first polymeric material phase (1a) is provided,
b. a decorative element (2) is transferred from a carrier film (5) onto a first surface (I) of the first polymeric material phase (1a) by hot stamping using a punch (4), and
c. a second polymeric material phase (1b) is applied on the first surface (I) of the first polymeric material phase (1a) such that the decorative element (2) is arranged between the first polymeric material phase (1a) and the second polymeric material phase (1b), wherein at least the first polymeric material phase (1a) or the second polymeric material phase (1b) is transparent and wherein providing the first material phase (1a) and applying the second material phase (1b) are done by injection molding.

2. Method according to claim 1, wherein in process step (b)
- the carrier film (5) with the decorative element (2) is arranged such that the decorative element (2) faces the first polymeric material phase (1a),
- the punch (4) acts on the surface of the carrier film (5) facing away from the decorative element (2) such that the decorative element (2) is pressed against the first surface (I), and
- the carrier film (5) is detached, wherein the decorative element (2) remains on the first surface (I).

3. Method according to claim 1 or 2, wherein one of the two polymeric material phases (1a, 1b) is opaque.

4. Method according to claim 3, wherein the first polymeric material phase (1a) is transparent and the second polymeric material phase (1b) is opaque.

5. Method according to one of claims 1 through 4, wherein the first polymeric material phase (1a) and the second polymeric material phase (1b) are produced by injection molding and wherein the first polymeric material phase (1a) is moved between the process steps (a) and (c) by means of a turning plate (13) or a rotary cube (14).

6. Method according to one of claims 1 through 5, wherein the decorative element (2) comprises a protective layer (2a), a decorative layer (2b), and an adhesive layer (2c), which are arranged in this order on the carrier film (5), and wherein a release layer (6) is arranged between the carrier film (5) and the decorative element (2).

7. Method according to one of claims 1 through 6, wherein at least the surface of the transparent polymeric material phase (1a, 1b) facing away from the decorative element (2) is provided with a protective coating (3), which preferably contains thermally curing or UV-curing lacquers, particularly preferably polysiloxanes, polyacrylates, polymethacrylates, polyurethanes, or mixtures or copolymers thereof.

8. Method according to one of claims 1 through 7, wherein the punch (4) in process step (b) has a temperature of 120 °C to 250 °C, preferably of 140 °C to 200 °C.

9. Method according to one of claims 1 through 8, wherein the punch acts with a pressure of 15 g/cm² to 50 kg/cm² on the first surface (I), preferably of 20 kg/cm² to 40 kg/cm², particularly preferably of 25 kg/cm² to 35 kg/cm², with an exposure time of at least 1 s, preferably of 1 s to 10 s, particularly preferably of 2 s to 4 s.

10. Method according to one of claims 1 through 9, wherein the material phases (1a, 1b) contain polycarbonate, polymethyl methacrylate, styrene acrylonitrile, acrylonitrile styrene acrylester, polyethylene terephthalate, or copolymers or mixtures.

11. Apparatus for producing a polymeric vehicle add-on part (1) with a decorative element, at least comprising
- a carrier mold (10),
- a means for producing a first polymeric material phase (1a),
- a hot stamping means (12) that is positionable relative to the first polymeric material phase (1a) such that a first surface (I) of the first material phase (1a) can be stamped with a decorative element (2), and
- a means for producing a second polymeric material phase (1b) on the first surface (I) of the first material phase (1a),
wherein the means for producing the first polymeric material phase (1a) is a first injection molding device (11a) and the means for producing the second polymeric material phase (1b) is a second injection molding device (11b),
and wherein
- the first injection molding device (11a) and the second injection molding device (11b) are arranged opposite one another,
- the carrier mold (10) is movable by means of a turning plate (13) from a first position associated with the first injection molding device (11a) into a second position associated with the second injection molding device (11b), and
- the hot stamping means (12) is movably mounted on a conveyor system and can be brought in between the first injection molding device (11a) and the carrier mold (10) or between the second injection molding device (11b) and the carrier mold (10),
or
- the first injection molding device (11a) and the second injection molding device (11b) are arranged opposite one another,
- the hot stamping means (12) is arranged substantially perpendicular to the axis between the injection molding devices (11a, 11b),
- the carrier mold (10) is movable by means of a rotary cube (14) from a first position associated with the first injection molding device (11a) through a second position associated with the hot stamping means (12) into a third position associated with the second injection molding device (11b).

12. Polymeric vehicle add-on part (1) with a decorative element, produced with the method according to one of claims 1 through 10, at least comprising a first polymeric material phase (1a), a second polymeric material phase (1b), and a decorative element (2) arranged between the two polymeric material phases (1a, 1b) that is applied by hot stamping on a first surface (I) of the first polymeric material phase (1a), wherein at least the first polymeric material phase (1a) or the second polymeric material phase (1b) is transparent and wherein the first polymeric material phase (1a) and the second polymeric material phase (1b) are produced by injection molding.

13. Use of a polymeric vehicle add-on part according to claim 12 in vehicles, wherein the transparent polymeric material phase (1a, 1b) faces outward, preferably as a radiator grill surround, pillar cover, sun visor, roof panel, vehicle window pane, light cover, mirror housing, frame member, trim strip, door sill, spoiler, fitting, or instrument panel.

## Revendications

1. - Procédé de fabrication d'un pièce rapportée de véhicule (1), en matière polymère, ayant un élément décoratif, dans lequel
a. une première phase de matière polymère (1a) est préparée ;
b. un élément décoratif (2) est transféré par estampage à chaud au moyen d'un poinçon (4) d'une feuille support (5) sur une première surface (I) de la première phase de matière polymère (1a) ; et
c. une seconde phase de matière polymère (1b) est appliquée sur la première surface (I) de la première phase de matière polymère (1a) de telle sorte que l'élément décoratif (2) est disposé entre la première phase de matière polymère (1a) et la seconde phase de matière polymère (1b),
dans lequel au moins la première phase de matière polymère (1a) ou la seconde phase de matière polymère (1b) est transparente et dans lequel la préparation de la première phase de matière (1a) et l'application de la seconde phase de matière (1b) ont lieu par moulage par injection.

2. - Procédé selon la revendication 1, dans lequel, dans l'étape de procédé (b) :
- la feuille support (5) avec l'élément décoratif (2) est disposée de telle sorte que l'élément décoratif (2) est tourné vers la première phase de matière polymère (1a) ;
- le poinçon (4) agit sur la surface de la feuille support (5) tournée à l'opposé de l'élément décoratif (2), de telle sorte que l'élément décoratif (2) est pressé contre la première surface (I) ; et
- la feuille support (5) est retirée, l'élément décoratif (2) restant sur la première surface (I).

3. - Procédé selon l'une des revendications 1 ou 2, dans lequel l'une des deux phases de matière polymère (1a, 1b) est opaque.

4. - Procédé selon la revendication 3, dans lequel la première phase de matière polymère (1a) est transparente et la seconde phase de matière polymère (1b) est opaque.

5. - Procédé selon l'une des revendications 1 à 4, dans lequel la première phase de matière polymère (1a) et la seconde phase de matière polymère (1b) sont produites par moulage par injection et dans lequel la première phase de matière polymère (1a) est déplacée entre les étapes de procédé (a) et (c) au moyen d'une plaque de retournement (13) ou d'un cube rotatif (14).

6. - Procédé selon l'une des revendications 1 à 5, dans lequel l'élément décoratif (2) comporte une couche protectrice (2a), une couche décorative (2b) et une couche adhésive (2c), qui sont disposées dans cet ordre sur le film support (5), et dans lequel une couche de séparation (6) est disposée entre la feuille support (5) et l'élément décoratif (2).

7. - Procédé selon l'une des revendications 1 à 6, dans lequel au moins la surface, tournée à l'opposé de l'élément décoratif (2), de la phase de matière polymère transparente (1a, 1b) est pourvue d'un revêtement de protection (3), qui contient des laques de préférence à durcissement thermique ou à durcissement par UV, de façon particulièrement préférée des polysiloxanes, des polyacrylates, des polyméthacrylates, des polyuréthanes ou des mélanges ou copolymères de ceux-ci.

8. - Procédé selon l'une des revendications 1 à 7, dans lequel le poinçon (4) dans l'étape de procédé (b) présente une température de 120 °C à 250 °C, de préférence de 140 °C à 200 °C.

9. - Procédé selon l'une des revendications 1 à 8, dans lequel le poinçon agit sur la première surface (I) avec une pression de 15 kg/cm² à 50 kg/cm², de préférence de 20 kg/cm² à 40 kg/cm², de façon particulièrement préférée de 25 kg/cm² à 35 kg/cm², avec une durée d'action d'au moins 1s, de préférence de 1s à 10s, de façon particulièrement préférée de 2s à 4s.

10. - Procédé selon l'une des revendications 1 à 9, dans lequel les phases de matière (1a, 1b) contiennent du polycarbonate, du poly(méthacrylate de méthyle), du styrène-acrylonitrile, de l'ester acrylique-styrène-acrylonitrile, du poly(téréphtalate d'éthylène) ou des copolymères ou mélanges.

11. - Dispositif pour la fabrication d'une pièce rapportée de véhicule (1), en matière polymère, ayant un élément décoratif, comportant au moins :
- un moule support (10);
- un moyen pour la fabrication d'une première phase de matière polymère (1a) ;
- un moyen d'estampage à chaud (12) qui est positionnable par rapport à la première phase de matière polymère (1a) de telle sorte qu'une première surface (I) de la première phase de matière (1a) soit estampable avec un élément décoratif (2) ; et
- un moyen pour la fabrication d'une seconde phase de matière polymère (1b) sur la première surface (I) de la première phase de matière (1a),
dans lequel le moyen pour la fabrication de la première phase de matière polymère (1a) est un premier dispositif de moulage par injection (11a) et le moyen pour la fabrication de la seconde phase de matière polymère (1b) est un second dispositif de moulage par injection (11b),
et dans lequel
- le premier dispositif de moulage par injection (11a) et le second dispositif de moulage par injection (11b) sont disposés à l'opposé l'un de l'autre;
- le moule support (10) est déplaçable au moyen d'une plaque de retournement (13) d'une première position associée au premier dispositif de moulage par injection (11a) à une seconde position associée au second dispositif de moulage par injection (11b); et
- le moyen d'estampage à chaud (12) est monté de manière déplaçable sur un système de transport et est rétractable entre le premier dispositif de moulage par injection (11a) et le moule support (10) ou entre le second dispositif de moulage par injection (11b) et le moule support (10),
ou
- le premier dispositif de moulage par injection (11a) et le second dispositif de moulage par injection (11b) sont disposés à l'opposé l'un de l'autre,
- le moyen d'estampage à chaud (12) est disposé sensiblement perpendiculairement à l'axe entre les dispositifs de moulage par injection (11a, 11b);
- le moule support (10) est déplaçable au moyen d'un cube rotatif (14) d'une première position associée au premier dispositif de moulage par injection (11a) à une troisième position associée au second dispositif de moulage par injection (11b) en passant par une deuxième position associée au moyen d'estampage à chaud (12).

12. - Pièce rapportée (1) de véhicule, en matière polymère, ayant un élément décoratif, obtenue par le procédé selon l'une des revendications 1 à 10, comportant au moins une première phase de matière polymère (1a), une deuxième phase de matière polymère (1b) et un élément décoratif (2) disposé entre les deux phases de matière polymère (1a, 1b), qui est appliqué sur une première surface (I) de la première phase de matière polymère (1a) au moyen d'un estampage à chaud, au moins la première phase de matière polymère (1a) ou la seconde phase de matière polymère (1b) étant transparente, et la première phase de matière polymère (1a) et la seconde phase de matière polymère (1b) étant obtenues par moulage par injection.

13. - Utilisation dans des véhicules d'une pièce rapportée de véhicule, en matière polymère, selon la revendication 12, dans laquelle la phase de matière polymère transparente (1a, 1b) est tournée vers l'extérieur, de préférence en tant qu'habillage de calandre de radiateur, garniture de pilier, pare-soleil, panneau de toit, vitre de véhicule, couvercle de lampe, boîtier de rétroviseur, élément de cadre, bande de garniture, seuil de porte, becquet, raccord ou tableau de bord.
